# EUROPÄISCHE PATENTANMELDUNG

(11) **EP 3 042 745 A1**
(43) Veröffentlichungstag der Anmeldung: **13.07.2016**
(21) Anmeldenummer: 15150144.2
(22) Anmeldetag: 06.01.2015
(51) Int. Cl.: B28B 1/16, B28B 23/00, E04C 1/41

(54) **Verfahren zur Herstellung von Betonfertigbausteinen und ein verfahrensgemäß hergestellter Betonfertigbaustein**

(71) Anmelder: Kovalchuk, Pavel, 67661 Kaiserslautern (DE); Gorin, Mikhail, 443001 Samara (RU)
(72) Erfinder: Kovalchuk, Pavel, 67661 Kaiserslautern (DE); Gorin, Mikhail, 443001 Samara (RU)
(74) Vertreter: Patentanwälte Dr. Keller, Schwertfeger

(57) **Zusammenfassung**

Die Erfindung betrifft Verfahren zur Herstellung von Betonfertigbausteinen, die wenigstens einen zentralen Keramsitbetonteil und einen Fassadenteil aufweisen, umfassend die Schritte:
- Erstellen einer flüssigen Fassadenzusammensetzung durch Vermischen von
(a) Sand,
(b) einem Zementbindemittel,
(c) Wasser,

- Einfüllen der flüssigen Fassadenzusammensetzung in Gussformen zur Bildung des Fassadenteils,
- Inkubieren der Gussformen unter Rütteln für eine Zeitdauer von wenigstens einer Minute,
- Erstellen einer Keramsitbetonmischung durch Vermischen von Keramsitkies mit einem Zementbindemittel und Wasser,
- Befüllen der mit der Fassadenzusammensetzung gefüllten Gussformen mit der Keramsitbetonmischung zur Bildung des zentralen Keramsitbetonteils,
- Freilegen der Betonfertigbausteine aus den Gussformen nach Erreichen eines gewünschten Festigungsgrades.

Ferner betrifft die vorliegende Erfindung einen Betonfertigbaustein mit einem zentralen Keramsitbetonteil (2), einem Fassenteil (1) und einem Verputzteil (3).

## Beschreibung

Die vorliegende Erfindung betrifft ein Verfahren zur Herstellung von Betonfertigbausteinen, die wenigstens einen zentralen Keramsitbetonteil und einen Fassadenteil aufweisen. Die Erfindung betrifft ferner einen Betonfertigbaustein, bestehend aus einem zusammenhängenden zentralen Keramsitbetonteil, einem Fassadenteil und einem Verputzteil.

Keramsit ist ein körniger Füllstoff, welcher dem Blähton zuzuordnen ist. Keramsit wird hergestellt, indem man Tonerde durch einen "Röstungsprozess" bei hohen Temperaturen brennt. Die so erhaltenen Tonteilchen gleichen einem porenhaltigen Granulat mit fester porzellanartiger Oberfläche. Blähton weist äußerst günstige wärmeisolierende und witterungsbeständige Qualitäten auf und ist zudem um ein Vielfaches leichter als andere Baumaterialien. Keramsit ist zudem feuerfest und aufgrund seiner verschlossenen Poren nur wenig saugfähig, was seine Wasserfestigkeit und Frostbeständigkeit begründet. Zudem ist Keramsit auch resistent gegen chemische Einflüsse, was den Naturrohstoff zu einem Kandidaten für einen Baustoff macht.

In der DE 24 30 914 A wird ein hitzebeständiges, feuerfestes und wärmedämmendes Erzeugnis aus Feuerbeton und ein Verfahren zu dessen Herstellung beschrieben. Die darin beschriebene Feuerbetonzusammensetzung besteht aus 10 bis 20 Gew.-% Zement und 80 bis 90 Gew.-% Zugschlagstoffen, wie Rohschamotte, Mullit, Korund, Porensinter oder Keramsit. Zudem können auch Anteile von Rohkaolin, Ton und Sand zugemengt werden.

Die DE 2 213 231 A beschreibt ein Verfahren zur Herstellung von porösen keramischen Produkten durch Reaktion zwischen Rauchgas- und Filterstau mit Ton und dergleichen. Ein ähnliches Verfahren ist auch in der DE 25 14 993 A beschrieben. Kennzeichnend ist, dass eine Mischung aus Ton und Kryolith, bedarfsweise auch MnO₂ eingesetzt wird. Das so erhaltene Produkt weist geschlossene Poren mit einem niedrigen Volumengewicht auf und eignet sich beispielsweise als Formkörper für Wände und Dächer im Bauwesen. Mit der beschriebenen Zusammensetzung erhält man Blähtonsteine mit einer sehr gleichmäßigen Porengrößenverteilung.

Die DE 25 28 621 A beschreibt ein Verfahren zur Herstellung von Betonbauteilen mit einem Bindemittel, beispielsweise Zement, anorganischen Zuschlagstoffen (wie Sand) und einem Zusatz aus geschäumtem Kunststoff (beispielsweise geschäumtes Polystyrol). Das Kunststoffgranulat wird vor und/oder während des Mischvorganges aufgeschäumt, und nach abgeschlossenem Mischvorgang wird das Mischgut einer Form zugeführt und in dieser verdichtet. Man erhält Betonfertigteile aus Leichtbeton, die sich beispielsweise als Wandbauelemente eignen. Ein Nachschäumen mit Kunststoff ist jedoch sehr aufwändig, zumal nicht alle Anforderungen hinsichtlich Feuer- und Witterungsbeständigkeit erfüllt werden können. Bei dem dort beschriebenen Verfahren wird das Polystyrol-Granulat in einen als Druckbehälter ausgebildeten Betonmischer eingeführt und in diesem durch ein zugeführtes Dampf- und Luftgemisch bei einer Temperatur von 87° C und einem Druck expandiert. Nach dem Druckabbau erfolgen eine Vermengung mit Zement und Sand und eine anschließende Verdichtung in einem Verdichter zum Erreichen der Kornfestigkeit.

Die DE 28 16 102 C2 beschreibt eine Mischung, die unter Zusatz von Wasser zu Beton erhärtet. Diese besteht aus 10 bis 15 Gew.-% Zement als Bindemittel, 82 bis 89,5 Gew.-% Zuschlagstoffen wie Sand, Schotter und Kies und 0,5 bis 3 Gew.-% eines Zusatzes zur Abbindebeschleunigung und Verbesserung der Eigenschaften des Betons. Die Verwendung eines Zusatzmittels verbessert wichtige Eigenschaften der Mischung wie Abbindebeschleunigung und Erhärtungsbeschleunigung sowie die Festigkeit des Betons. Bei den Zusätzen handelt es sich hauptsächlich um Metall-Chlorid-Verbindungen.

Daneben sind auch Verfahren zur Herstellung fertig geformter Bauelemente bekannt, die auf keram-hydraulischer Grundlage basieren. Ein solches Verfahren ist Bestandteil der Patentschrift 61 982, bei dem ein tonhaltiger Ziegelrohstoff bei höchstens 700° C gebrannt, gemahlen und mit weniger als 10 % Brandkalk CaO versetzt, verpresst und im Härtekessel in Sattdampf verfestigt wird. Dem tonhaltigen Ziegelrohstoff können im Pressvorgang leicht Zuschlagstoffe und/oder Stahlwehrungen beigefügt werden. Die Presslinge werden in einem Härtekessel (Autoklav) für einige Stunden gehärtet. Als Ergebnis erhält man einen geformten Baustein mit einer Druckfestigkeit von 300 kp/cm².

Auch die DE 37 26 752 A1 beschäftigt sich mit einem Verfahren und einer Vorrichtung zur Herstellung von Betonbausteinen. Hierbei werden die Betonbausteine in einer Form gegossen. Dabei wird in einer primären Form eine sekundäre Form mit Hilfe eines thermoplastischen Films hergestellt. Der Film wird an einer flachen Heizoberfläche gleichmäßig erhitzt und in die primäre Form, ohne Falten zu bilden, eingesogen. Die sekundäre Form wird dann mit der Betonmischung gefüllt, verdichtet und praktisch unmittelbar zusammen mit der Betonfüllung aus der primären Form entfernt, noch bevor eine wirksame Aushärtung der Betonmischung stattfinden kann. Damit findet die Aushärtung in der sekundären Form außerhalb der primären Form statt. Charakteristisch bei den hergestellten Betonbausteinen ist, dass deren Wände mit einer thermoplastischen Folie ausgefüttert sind, die zunächst über die offene primäre Form bewegt, erhitzt und durch Unterdruck in die primäre Form gesaugt wird. Erst dann wird die Betonmischung in die Form gefüllt. Ähnliche Verfahren sind auch Bestandteil der US 4,331,628 B, US 29945, US 3,492,384 B und US 1,584,595 B.

Die DE 10 2004 063 185 A1 beschreibt einen Baukörper aus Gipsbausteinen sowie ein Verfahren zu dessen Herstellung. Als Materialien kommen Kalziumsulfatdihydrat als Gips und ein weiteres Element zur Strahlenabsorption zum Einsatz. Die DE 101 53 914 B4 beschreibt einen quaderförmigen Baustein aus Holz mit Formschlusselementen zur Erzeugung einer Steckverbindung zwischen mehreren Bausteinen. Allein die Materialeigenschaften sind mit Teilen aus Beton allerdings nicht vergleichbar. Daneben sind noch Polymerbetonsysteme bekannt, wie beispielsweise beschrieben in der DE 20 2014 102 825 U1.

Beim Hausbau kommt noch immer die Massivbauweise zum Einsatz, bei der Ziegeltonsteine zur Errichtung der Außen- und Innenwände über eine Zementmischung miteinander verbunden werden. Neben Baustoffziegeln kommen Porenbeton und Kalksandstein zum Einsatz. Nach wie vor ist Beton eine unerlässliche Komponente beim Hausbau. Nachteilig bei der bekannten Massivbauweise ist jedoch, dass die Außenwände, d.h. die Fassade, zunächst verputzt und anschließend gestrichen werden muss. Das Gleiche gilt auch für die Innenwände, die eine Verputzseite aufweisen. Zusätzlich müssen umfangreiche Maßnahmen zur Wärmeisolierung und ggf. zur Brandfestigkeit getroffen werden. Hierbei kommen teure Isoliermaterialien zum Einsatz, beispielsweise Wärmedämmplatten. Daneben werden bei der Gebäudehülle Anforderungen an das Feuchte- und Wärmeverhalten für ein gesundes und behagliches Wohnklima gestellt. Somit kommt also eine Vielzahl unterschiedlicher Materialien zum Einsatz, was zum einen kostenaufwändig ist, zum anderen jedoch auch einen hohen Zeitbedarf und Personaleinsatz für die Fertigstellung erfordert.

Vor diesem Hintergrund ist es Aufgabe der vorliegenden Erfindung, einen Betonfertigbaustein sowie ein Verfahren zu dessen Herstellung bereitzustellen, bei dem der Betonteil und der äußere Fassadenteil baufertig miteinander verbunden sind und welcher zudem überdurchschnittliche wärmeisolierende, witterungsbeständige und feuerbeständige Qualitäten aufweist.

Diese Aufgabe wird gelöst durch ein Herstellungsverfahren für Betonfertigbausteine mit den Merkmalen des Anspruchs 1 und einen Betonfertigbaustein mit den Merkmalen des Anspruchs 13.

Der erfindungsgemäße Betonfertigbaustein besteht aus einem zentralen Keramsitbetonteil und einem Fassadenteil, welcher der nach außen gerichteten Wandseite einer Mauer entspricht.

In einem ersten Schritt des Verfahrens wird zunächst eine flüssige Fassadenzusammensetzung erstellt, indem folgende Komponenten miteinander vermischt werden:
a) Sand,
b) ein Zementbindemittel,
c) Wasser.

Vorzugsweise kommen bei der Fassadenzusammensetzung zwei unterschiedliche Korngrößen bei der Sandkomponente zum Einsatz. Die nach außen gerichtete Oberfläche der Fassadenzusammensetzung besteht vorzugsweise aus grobkörnigem Sand mit Korngrößen zwischen 2,5 und 3 mm. Die innere Oberfläche des Fassadenteils (Verputzseite) besteht vorzugsweise aus feinkörnigem Sand mit Korngrößen zwischen 0,1 und 1,0 mm, bevorzugt 0,4 bis 0,8 mm.

Bei dem Zementbindemittel handelt es sich vorzugsweise um einen beliebigen Zementstoff oder ein zementähnliches Bindemittel, wie es üblicherweise bei der Betonherstellung zum Einsatz kommt. Damit der Betonfertigbaustein die vorgegebenen Eigenschaften hinsichtlich Dichte und Festigkeit erhält, wird vorzugsweise Industriewasser mit einem minimalen Anteil an Natriumchlorid verwendet.

Die so erhaltene flüssige Fassadenzusammensetzung wird in Gussformen eingefüllt, um den Fassadenteil zu bilden. Die Gussformen werden anhand zuvor erstellter Schablonen hergestellt. Vorzugsweise umfassen die Gussformen einzelne befüllbare Zellen, welche durch Zwischenwände voneinander getrennt sind. Die Wände und Zwischenwände werden in die Formen eingesetzt und mit entsprechenden Verriegelungseinrichtungen verschlossen. Pro Zelle kann somit ein Betonfertigbaustein hergestellt werden. In einer Ausführungsvariante wird zunächst in einer Betonmischanlage Sand mit Korngrößen zwischen 0,25 und 3 mm mit dem Zementbindemittel vermischt. Nachdem der Sand mit dem Zement vermengt wurde, wird Wasser hinzugegeben, welches vorzugsweise zusätzlich einen Plastifikator enthält. Durch die Zugabe eines Plastifikators wird dem Beton eine gewisse Elastizität verliehen. Ein bevorzugter Plastifikator für die Fassadenzusammensetzung (aber auch für die nachfolgend beschriebene Keramsitbetonmischung) ist ein auf Polycarboxyläther basierender Plastifikator. Vorzugsweise wird hierfür MasterGlenium®-150der Firma BASF verwendet.

In einer bevorzugten Ausführungsform kann die Fassadenzusammensetzung bedarfsweise zusätzlich Polymerfarbstoffe enthalten. Anschließend werden die einzelnen Komponenten miteinander vermischt. Normalerweise dauert die Herstellung der Lösung für die Fakturaschicht etwa 5 bis 10 Minuten.

Zeitgleich oder nachfolgend wird eine Keramsitbetonmischung hergestellt, indem eine Menge Keramsitkies mit einem Zementbindemittel und Wasser vermengt wird. Vorzugsweise kommen Mischverhältnisse zwischen 5 : 1 und 2 : 1 (Kies : Zement) zum Einsatz. Vorzugsweise wird hierfür das gleiche Zementbindemittel verwendet wie für die Herstellung der Fassadenzusammensetzung. Das für die Herstellung der Fassadenzusammensetzung und/oder Keramsitbetonmischung verwendete Zementbindemittel enthält vorzugsweise keine Mineralienzusätze. Vorzugsweise ist der Keramsitbetonteil sandfrei. Für die Herstellung des Keramsitbetonteils des erfindungsgemäßen Betonfertigbausteins kommt vorzugsweise Keramsitkies mit einer Fraktionsgröße zwischen 5 und 10 mm und einem Volumengewicht zwischen 180 und 350 kg/m³ zum Einsatz. Dies gewährt eine hohe Dichte und Wärmeleitfähigkeit. Der Keramsitkies wird mit dem Zementbindemittel vermengt, während der Mischung gleichzeitig Wasser hinzugegeben wird, bis ein homogen vermengter Beton entstanden ist. Der Beton gilt als fertig, wenn sich eine glänzende Zementmilch auf der Oberfläche der Keramsitgranulate ausgebildet hat. Der so hergestellte Beton kann in einem Betonbehälter für die spätere Befüllung der Gussformen zwischengelagert werden.

Die hier zum Einsatz kommenden Gussformen enthalten vorzugsweise zwischen 5 und 20 Zellen. Jede Zelle wird zunächst mit der erforderlichen Menge der Fassadenzusammensetzung gefüllt. Anschließend werden die Gussformen unter Rütteln für eine Zeitdauer von wenigsten 1 min inkubiert. Dies erfolgt vorzugsweise auf einem Rütteltisch. Die Formen werden dann an die Betonfüllstelle verschoben, wo die fertige Keramsitbetonmischung aus dem Betonbehälter in die Zellen der Gussformen eingefüllt wird. Nachdem alle Zellen der Gussformen gefüllt sind, werden die Formen manuell geglättet und bedarfsweise mittels einer einfachen Sand-Zement-Lösung verputzt, wodurch der Verputzteil entsteht. Für die anschließende Aushärtung verbleiben die Formen für etwa 12 Stunden an ihren Plätzen. Nach dieser Zeitdauer haben die Blöcke etwa 25 % ihrer Festigkeit erreicht und sind bereit für das Freilegen der Betonfertigbausteine aus den Gussformen. Vorzugsweise wird das Freilegen der Betonfertigbausteine bei einem Festigungsgrad von wenigstens 25 % durchgeführt.

Ein wesentlicher Vorteil bei dem erfindungsgemäßen Verfahren ist darin zu sehen, dass der Fassadenteil fest mit dem Keramsitbetonteil verbunden ist. Klebstoffe oder andere Klebekomponenten zur Herstellung einer Bindung zwischen Keramsitbeton und Fassadenteil sind daher nicht notwendig.

Um die gewünschten Eigenschaften beizubehalten, enthält die verwendete Keramsitbetonmischung vorzugsweise keine Mineralienzusätze. Die Festigungszeit nach Befüllen der Gussform mit der Keramsitbetonmischung beträgt üblicherweise zwischen 8 und 15 Stunden, vorzugsweise 12 Stunden.

Der erfindungsgemäß hergestellte Betonfertigbaustein besitzt somit einen zentralen Keramsitbetonteil, welcher aus einzelnen Keramsitgranulaten besteht. Diese besitzen normalerweise unterschiedliche Korngrößen. Der zentrale Keramsitkern besitzt hervorragende wärmeisolierende und witterungsbeständige Qualitäten und ist zudem feuerfest. Gleichzeitig ist der Fassadenteil vollständig ausgebildet und fest mit dem zentralen Keramsitbetonteil verbunden. Auf der dem Fassadenteil gegenüberliegenden Seite wird der Keramsitbetonkern von einem Verputzteil begrenzt. Die Verputzschicht wird üblicherweise mit einer Sand-Zement-Mischung hergestellt, indem die Oberfläche der Keramsitbetonmischung nach dem Befüllen geglättet wird.

Ein bevorzugter erfindungsgemäßer Betonfertigbaustein umfasst folgende Zusammensetzung:
- einen zentralen Keramsitbetonteil, der aus Keramsitkies mit einer Korngröße zwischen 5 und 10 mm und einer Dichte von 180 bis 350 kg/m³ besteht, der mit einem mineralienfreien Zementbindemittel gebunden ist,
- einen Fassadenteil, der aus einer Fassadenzusammensetzung besteht, bei der die nach außen gerichtete Oberfläche der Fassadenzusammensetzung aus grobkörnigem Sand mit Korngrößen von 2,5 bis 3 mm besteht, wobei die innere Oberfläche des Blocks aus feinkörnigem Sand mit Korngrößen von 0,1 bis 1,0 mm besteht und
- einen Verputzteil, welcher aus einem Sand-Zementgemisch besteht, wobei der Keramsitbetonteil, der Fassadenteil und der Verputzteil im Betonfertigblock als einzelner Baustein miteinander verbunden sind.

Die Erfindung wird in den nachfolgenden Beispielen näher erläutert.

### 1. Herstellung der Fassadenzusammensetzung

Das wichtigste Inertmaterial für die Herstellung der Fassadenzusammensetzung ist grobkörniger Sand mit Korngrößen zwischen 2,5 und 3 mm. Grobkörniger Sand ist in Verbindung mit einem mineralienfreien Zement äußerst beweglich, was sich beispielsweise bei der Einwirkung von Vibrationen oder Erschütterungen bemerkbar macht. Die Verputzseite des Blocks wird mit kleinporigem Sand mit Korngrößen zwischen 0,1 und 1,0 mm verputzt.

Als Zementbindemittel wird vorzugsweise Zement mit der Bezeichnung PZB-500 D-0 oder PZB-600 D-0 verwendet. Die Bezeichnung D-0 weist darauf hin, dass das Zementbindemittel keine Mineralienzusätze enthält.

Der Fassadenzusammensetzung können zusätzlich noch Farbstoffe zugemengt werden, vorzugsweise Polymerfarbstoffe. Ferner können der Fassadenzusammensetzung zusätzlich Plastifikatoren zugegeben werden, um die Elastizität dieser Schicht zu erhöhen kommt die Zusammensetzung MasterGlenium®-150der Firma BASF zum Einsatz.

Als Lösungsmittel kommt Industriewasser zum Einsatz, welches einen minimalen Anteil an NaCl enthält.

Für die Herstellung der Fakturaschicht wird eine Betonmischanlage mit grobkörnigem Sand mit einer Korngröße zwischen 0,25 und 3 mm und einem Gewicht von 200 kg befüllt. Als zweite Komponente wird PZB-500 D-0 (bzw. PZB-600 D-0) in einer Menge von 65 kg als Zementbindemittel hinzugegeben. Anschließend wird die Betonmischanlage eingeschaltet und die beiden Komponenten werden miteinander vermengt. Die Vermengung dauert etwa 2 Minuten, bis ein homogenes Gemisch entsteht. Nach 2 Minuten wird der Mischvorgang beendet und als dritte Komponente 19 l Wasser zusammen mit dem Plastifikator zugegeben. Anschließend wird die Mischung für drei weitere Minuten miteinander vermengt, bis eine homogene, bewegliche Lösung entstanden ist. Schließlich wird als vierte Komponente der Farbstoff zugegeben. Nach Zugabe des Farbstoffes zu der Lösung erfolgt eine weitere Durchmischung für etwa 2 Minuten. Die Herstellung der Fassadenzusammensetzung dauert üblicherweise etwa 7 Minuten. Die so hergestellte Fassadenzusammensetzung ist ausreichend für die Herstellung von 100 Betonfertigbausteinen.

### 2. Herstellung von sandfreiem Keramsitbeton

Für die Herstellung des Keramsitbetonteils wird Keramsitkies mit Fraktionen mit Korngrößen zwischen 5 und 10 mm und einem Volumengewicht zwischen 180 und 350 kg/m³ verwendet. Der Keramsitkies wird zusammen mit 180 kg Zementbindemittel (PZU-500 D-0 bzw. PZU-600 D-0) vermengt. Nach Zugabe der beiden Komponenten wird die Betonmischanlage eingeschaltet und der Keramsitzementmischung gleichzeitig Wasser hinzugegeben, bis ein homogen vermischter Beton entstanden ist. Der Beton gilt als fertig, wenn sich auf der Oberfläche der sich gebildeten Keramsitgranulate eine glänzende Zementmilch ausgebildet hat.

### 3. Formung des Betonfertigbausteins

Für die Herstellung der Betonfertigbausteine werden Gussformen verwendet, die den Betonfertigbausteinen die entsprechende Form geben. Vorzugsweise kommen Gussformen zum Einsatz, welche eine Anzahl von Zellen umfassen, welche durch Wände und Zwischenwände voneinander getrennt sind. Auf diese Weise lassen sich entsprechende Anteile der Zellen mehrerer Betonsteine gleichzeitig herstellen.

Üblicherweise werden die Gussformen auf einem Rütteltisch platziert, und jede der Zellen wird in diesem Beispiel mit 2,5 kg Fassadenzusammensetzung befüllt. Auf dem Rütteltisch (2500 x 1200) können vorzugsweise zwei Formen gleichzeitig verarbeitet werden. Nachdem sämtliche Zellen der beiden Formen mit der Fassadenzusammensetzung gefüllt sind, wird der Rütteltisch eingeschaltet. Die Oberfläche der Fassadenzusammensetzung in den einzelnen Zellen der Gussformen ist nun einheitlich ausgebildet. Die Formen werden dann an die Betonfüllstelle verschoben. Der fertig zusammengemischten Keramsitbeton wird aus dem Betonlagerungsbehälter in die Zellen der Gussformen eingefüllt. Dabei bildet sich eine Keramsitbetonschicht angrenzend an die Fassadenschicht aus. Nach dem Befüllen der einzelnen Zellen wird die Oberfläche der Keramsitbetonschicht geglättet und anschließend mit einer Sand-Zement-Lösung Typ M-100 verputzt. Die gefüllten Formen verbleiben für eine Zeitdauer von 12 Stunden an ihren Plätzen. Nach Ablauf von 12 Stunden haben die Blöcke etwa 25 % ihrer Festigkeit erreicht und sind bereit für die anschließende Freilegung der Formkörper aus den Gussformen.

Für die Freilegung der Bausteine aus den Gussformen werden die Verriegelungseinrichtungen geöffnet und sämtliche Zwischenwände entfernt, so dass die Betonbausteinblöcke herausgenommen werden können. Nach dem Herausnehmen der Blöcke werden die Formen wieder in ihren Ausgangszustand gebracht. Vorzugsweise erfolgt nach jeder Montage bzw. Demontage der Formteile eine Schmierung, um deren erneuten Einsatz für die Herstellung von Betonfertigbausteinen sicherzustellen.

Die so hergestellten Betonfertigbausteine besitzen eine einheitliche Größe und einen einheitlichen Aufbau. So bestehen sie aus einer äußeren Fassadenzusammensetzung, die direkt an den Zentralkeramsitbetonkern anschließt. Das andere Ende des Keramsitbetonkerns besteht aus einer Verputzschicht. Beide Oberflächen können bedarfsweise weiter bearbeitet werden. Ein Festigkeitsgrad von etwa 25 % reicht für eine Freilegung der Betonblöcke aus den Formen aus. Anschließend können sie beispielsweise auf Paletten gestapelt werden. Nach Ablauf von 25 Stunden haben die Blöcke etwa 75 % ihres Festigkeitsgrades erreicht und sind vertriebsbereit.

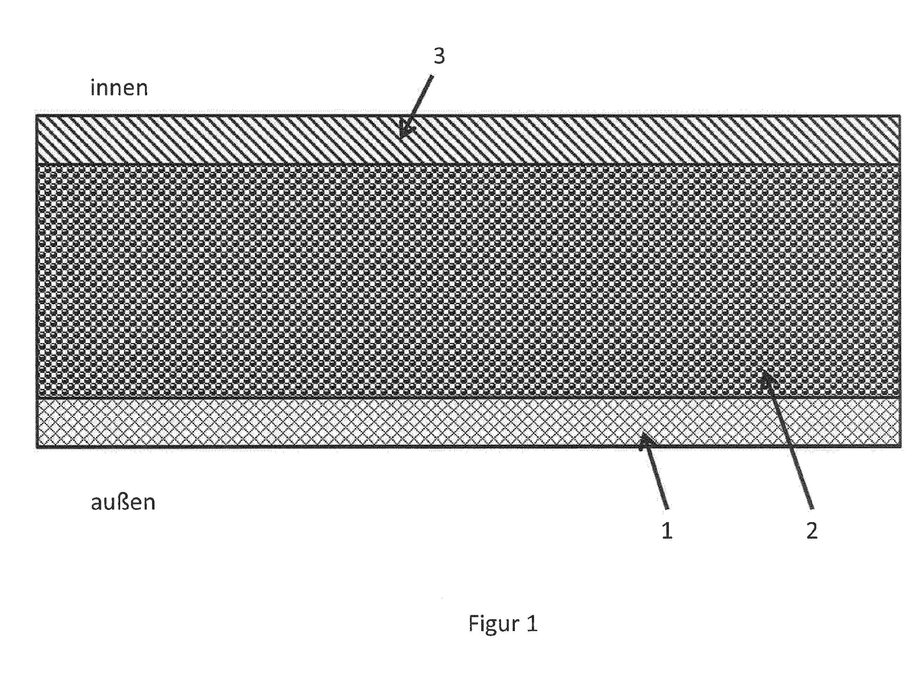

In Fig. 1 ist der Aufbau eines erfindungsgemäßen Betonfertigbausteins gezeigt. Dieser besteht aus einem äußeren Fassadenteil 1 und einem zentralen Keramsitbetonteil 2. Das gegenüberliegende Ende des Keramsitbetonteils 2 wird von dem Verputzteil 3 begrenzt. Der Betonfertigbaustein besitzt hervorragende wärmeisolierende und witterungsbeständige Eigenschaften und ist zudem feuerfest. Ein wesentlicher Vorteil ist, dass alle drei Schichten fest miteinander verbunden sind, ohne dass Klebestoffe zum Einsatz kommen müssen. Der Fassadenteil 1 kann zudem eine unterschiedliche Farbgebung aufweisen, je nachdem, welche Farbstoffe der Fassadenzusammensetzung zugemengt worden sind. Der Keramsitbetonteil besteht aus unterschiedlichen Granulaten und weist demzufolge auch unterschiedliche Porengrößen in den Zwischenräumen auf. Der Verputzteil 3, aber auch der Fassadenteil 1 können weiter verarbeitet werden.

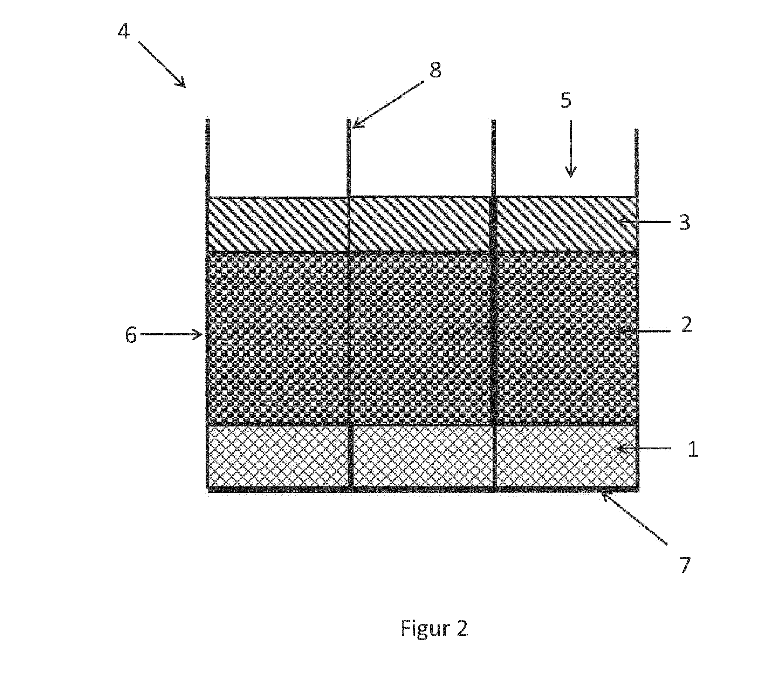

In Fig. 2 sind schemenhaft Gussformen 4 zu erkennen, die der Herstellung der Betonfertigbausteine dienen. Die Gussformen 4 bestehen aus einem Boden 7, Seitenwänden 6 und Zwischenwänden 8. Die Wände 6 und die Zwischenwände 8 bilden einzelne Zellen 5, die der Herstellung der Betonfertigblöcke dienen. Zunächst wird die Fassadenzusammensetzung eingefüllt, welche den Fassadenteil 1 bildet. Nach der erforderlichen Vermengung und Verrüttelung erfolgt das Einfüllen der Keramsitbetonmischung in dieselben Formen zur Ausbildung des zentralen Keramsitbetonteils 2. Schließlich wird die Oberfläche des Keramsitbetonteils 2 glatt gestrichen und mit einer Sand-Zement-Mischung 3 verputzt, so dass sich der Verputzteil 3 ausbildet. Nach dem Erreichen des gewünschten Festigungsgrades können die Zwischenwände 8 und auch die Wände 6 entfernt werden, wodurch die einzelnen Betonfertigbausteine aus den Zellen freigegeben werden. Die Zwischenwände 8 und Wände 6 werden vorzugsweise über Verriegelungseinrichtungen (nicht gezeigt) zusammengehalten. Hierbei können beispielsweise Spannschlösser oder Verriegelungsgurte zum Einsatz kommen.

## Patentansprüche

1. Verfahren zur Herstellung von Betonfertigbausteinen, die wenigstens einen zentralen Keramsitbetonteil und einen Fassadenteil aufweisen, umfassend die Schritte:
- Erstellen einer flüssigen Fassadenzusammensetzung durch Vermischen von
(a) Sand,
(b) einem Zementbindemittel,
(c) Wasser,
- Einfüllen der flüssigen Fassadenzusammensetzung in Gussformen zur Bildung des Fassadenteils,
- Inkubieren der Gussformen unter Rütteln für eine Zeitdauer von wenigstens einer Minute,
- Erstellen einer Keramsitbetonmischung durch Vermischen von Keramsitkies mit einem Zementbindemittel und Wasser,
- Befüllen der mit der Fassadenzusammensetzung gefüllten Gussformen mit der Keramsitbetonmischung zur Bildung des zentralen Keramsitbetonteils,
- Freilegen der Betonfertigbausteine aus den Gussformen nach Erreichen eines gewünschten Festigungsgrades.

2. Verfahren nach Anspruch 1, **dadurch gekennzeichnet, dass** die Oberfläche der Keramsitbetonmischung nach dem Befüllen geglättet und anschließend mit einer Sand-Zement-Mischung verputzt wird, wodurch ein Verputzteil entsteht.

3. Verfahren nach Anspruch 1 oder 2, **dadurch gekennzeichnet, dass** die nach außen gerichtete Oberfläche der Fassadenzusammensetzung aus grobkörnigem Sand mit Korngrößen von 2,5 bis 3 mm hergestellt und dass die innere Oberfläche des Blocks (Verputzseite) aus feinkörnigem Sand mit Korngrößen von 0,1 bis 1,0 mm hergestellt wird.

4. Verfahren nach einem der vorhergehenden Ansprüche, **dadurch gekennzeichnet, dass** das verwendete Zementbindemittel keine Mineralienzusätze enthält.

5. Verfahren nach einem der vorhergehenden Ansprüche, **dadurch gekennzeichnet, dass** die verwendete Keramsitbetonmischung keine Mineralienzusätze enthält.

6. Verfahren nach einem der vorhergehenden Ansprüche, **dadurch gekennzeichnet, dass** der Fassadenzusammensetzung bedarfsweise zusätzlich Polymerfarbstoffe zugemengt werden.

7. Verfahren nach einem der vorhergehenden Ansprüche, **dadurch gekennzeichnet, dass** zu Herstellung der Keramsitbetonmischung Keramsitkies mit Korngrößen von 5 bis 10 mm und einem Volumengewicht von 180 bis 350 kg / m³ verwendet wird.

8. Verfahren nach einem der vorhergehenden Ansprüche, **dadurch gekennzeichnet, dass** der Fassadenzusammensetzung und/oder der Keramsitbetonmischung zur Erhöhung der Elastizität ein auf Polycarboxyläther basierender Plastifikator zugemengt wird.

9. Verfahren nach einem der vorhergehenden Ansprüche, **dadurch gekennzeichnet, dass** die Gussformen für jeden Betonfertigbaustein mehrere Zellen aufweist, welche durch Zwischenwände voneinander getrennt sind.

10. Verfahren nach einem der vorhergehenden Ansprüche, **dadurch gekennzeichnet, dass** die Gussformen mit Verriegelungseinrichtungen verschlossen werden.

11. Verfahren nach einem der vorhergehenden Ansprüche, **dadurch gekennzeichnet, dass** die Festigungszeit nach Befüllen der Gussformen mit der Keramsitbetonmischung zwischen 8 und 15 Stunden beträgt.

12. Verfahren nach einem der vorhergehenden Ansprüche, **dadurch gekennzeichnet, dass** nach dem Befüllung der Zellen der Gussformen mit der Fassadenzusammensetzung und dem Rütteln zugleich die Befüllung mit der Keramsitbetonmischung erfolgt.

13. Betonfertigbaustein, umfassend
- einen zentralen Keramsitbetonteil (2), der aus Keramsitkies mit einer Korngröße zwischen 5 und 10 mm und einer Dichte von 180 bis 350 kg/m³ besteht, der mit einem mineralienfreien Zementbindemittel gebunden ist,
- einen Fassadenteil (1), der aus einer Fassadenzusammensetzung besteht, bei der die nach außen gerichtete Oberfläche der Fassadenzusammensetzung aus grobkörnigem Sand mit Korngrößen von 2,5 bis 3 mm besteht, wobei die innere Oberfläche des Blocks (Verputzseite) aus feinkörnigem Sand mit Korngrößen von 0,1 bis 1,0 mm besteht und
- einen Verputzteil (3), welcher aus einem Sand-Zementgemisch besteht, wobei der Keramsitbetonteil (2), der Fassadenteil (1) und der Verputzteil (3) im Betonfertigblock als einzelner Baustein miteinander verbunden sind.

## Geänderte Patentansprüche

### Geänderte Patentansprüche gemäss Regel 137(2) EPÜ.

1. Verfahren zur Herstellung von Betonfertigbausteinen, die wenigstens einen zentralen Keramsitbetonteil und einen Fassadenteil aufweisen, umfassend die Schritte:
- Erstellen einer flüssigen Fassadenzusammensetzung durch Vermischen von
(a) Sand,
(b) einem Zementbindemittel,
(c) Wasser,
- Einfüllen der flüssigen Fassadenzusammensetzung in Gussformen zur Bildung des Fassadenteils,
- Inkubieren der Gussformen unter Rütteln für eine Zeitdauer von wenigstens einer Minute,
- Erstellen einer Keramsitbetonmischung durch Vermischen von Keramsitkies mit einem Zementbindemittel und Wasser,
- Befüllen der mit der Fassadenzusammensetzung gefüllten Gussformen mit der Keramsitbetonmischung zur Bildung des zentralen Keramsitbetonteils, wobei die Oberfläche der Keramsitbetonmischung nach dem Befüllen geglättet und anschließend mit einer Sand-Zement-Mischung verputzt wird, wodurch ein Verputzteil entsteht,
- Freilegen der Betonfertigbausteine aus den Gussformen nach Erreichen eines gewünschten Festigungsgrades,
**dadurch gekennzeichnet, dass** der Fassadenzusammensetzung und/oder der Keramsitbetonmischung zur Erhöhung der Elastizität ein auf Polycarboxyläther basierender Plastifikator zugemengt wird.

2. Verfahren nach Anspruch 1, **dadurch gekennzeichnet, dass** die nach außen gerichtete Oberfläche der Fassadenzusammensetzung aus grobkörnigem Sand mit Korngrößen von 2,5 bis 3 mm hergestellt und dass die innere Oberfläche des Blocks (Verputzseite) aus feinkörnigem Sand mit Korngrößen von 0,1 bis 1,0 mm hergestellt wird.

3. Verfahren nach einem der vorhergehenden Ansprüche, **dadurch gekennzeichnet, dass** das verwendete Zementbindemittel keine Mineralienzusätze enthält.

4. Verfahren nach einem der vorhergehenden Ansprüche, **dadurch gekennzeichnet, dass** die verwendete Keramsitbetonmischung keine Mineralienzusätze enthält.

5. Verfahren nach einem der vorhergehenden Ansprüche, **dadurch gekennzeichnet, dass** der Fassadenzusammensetzung bedarfsweise zusätzlich Polymerfarbstoffe zugemengt werden.

6. Verfahren nach einem der vorhergehenden Ansprüche, **dadurch gekennzeichnet, dass** zu Herstellung der Keramsitbetonmischung Keramsitkies mit Korngrößen von 5 bis 10 mm und einem Volumengewicht von 180 bis 350 kg / m³ verwendet wird.

7. Verfahren nach einem der vorhergehenden Ansprüche, **dadurch gekennzeichnet, dass** die Gussformen für jeden Betonfertigbaustein mehrere Zellen aufweist, welche durch Zwischenwände voneinander getrennt sind.

8. Verfahren nach einem der vorhergehenden Ansprüche, **dadurch gekennzeichnet, dass** die Gussformen mit Verriegelungseinrichtungen verschlossen werden.

9. Verfahren nach einem der vorhergehenden Ansprüche, **dadurch gekennzeichnet, dass** die Festigungszeit nach Befüllen der Gussformen mit der Keramsitbetonmischung zwischen 8 und 15 Stunden beträgt.

10. Verfahren nach einem der vorhergehenden Ansprüche, **dadurch gekennzeichnet, dass** nach dem Befüllung der Zellen der Gussformen mit der Fassadenzusammensetzung und dem Rütteln zugleich die Befüllung mit der Keramsitbetonmischung erfolgt.

11. Betonfertigbaustein, umfassend
- einen zentralen Keramsitbetonteil (2), der aus Keramsitkies mit einer Korngröße zwischen 5 und 10 mm und einer Dichte von 180 bis 350 kg/m³ besteht, der mit einem mineralienfreien Zementbindemittel gebunden ist,
- einen Fassadenteil (1), der aus einer Fassadenzusammensetzung besteht, bei der die nach außen gerichtete Oberfläche der Fassadenzusammensetzung aus grobkörnigem Sand mit Korngrößen von 2,5 bis 3 mm besteht, wobei die innere Oberfläche des Blocks (Verputzseite) aus feinkörnigem Sand mit Korngrößen von 0,1 bis 1,0 mm besteht und
- einen Verputzteil (3), welcher aus einem Sand-Zementgemisch besteht, wobei der Keramsitbetonteil (2), der Fassadenteil (1) und der Verputzteil (3) im Betonfertigblock als einzelner Baustein miteinander verbunden sind,
**dadurch gekennzeichnet, dass** die Fassadenzusammensetzung und/oder die Keramsitbetonmischung zur Erhöhung der Elastizität einen auf Polycarboxyläther basierenden Plastifikator enthält.
